# EUROPEAN PATENT APPLICATION

(11) **EP 3 210 707 A1**
(43) Date of publication of application: **30.08.2017**
(21) Application number: 17000308.1
(22) Date of filing: 28.02.2017
(51) Int. Cl.: B23K 9/02, B23K 9/12, B23K 9/173, B23K 9/29, B23K 9/32

(54) **SYSTEM AND METHOD FOR WELDING USING A WIRE MANIPULATION DEVICE**

(30) Priority: 29.02.2016 US 201662301400 P; 22.02.2017 US 201715439101
(71) Applicant: Lincoln Global, Inc., Santa Fe Springs, CA 90670 (US)
(72) Inventor: WAHLEN, Patrick S., Jupiter, FL 33458 (US)
(74) Representative: Grosse Schumacher Knauer von Hirschhausen

(57) **Abstract**

A welding system and A method AREprovided which moves a welding consumable (140) during a welding operation, where the consumable (140) is moved downstream of the welding contact tip (112) during welding. A wire manipulation device (135, 137) is provided which causes the consumable (140) to move after it has left the contact tip (112) and before the consumable (140) reaches the weld puddle of the welding operation. The consumable (140) can be moved in different patterns during welding and the welding process parameters, such as wire feed speed, etc. can be changed based on the movement of the wire (140).

## Description

### TECHNICAL FIELD

Devices, systems, and methods consistent with embodiments of the present invention systems and methods for welding using a rotating consumable, and more specifically, methods and systems for welding using a rotating consumable to reduce gap width, and still more particularly the invention relates to a welding system and a method of welding according to the preamble of claim 1 respectively 8.

### BACKGROUND

Various methodologies have been developed to weld/join workpieces together. As these technologies advance more complex materials are being joined which require specialized welding processes. For example, those welding processes used to join materials used for high stress and strength applications, such as for liquid natural gas tanks, require specialized welding - for example with workpieces having a high nickel content - and which use very expensive consumables In the welding process. For example, when welding in the flat or horizontal, or even vertical positions, with an open root gap or with a backing bar it is difficult to obtain proper side wall fusion due to the decreased fluidity of the welding pool in comparison to carbon steel. Further, when welding Ni based materials It Is desirable to minimize the root gap but in order to obtain proper side wall fusion to ensure a proper weld. For Ni based workpieces this is typically done by weaving the welding torch back-and-forth in a weave pattern. However, because of the weaving pattern root gaps must be widened (for example over 10mm gap for a 6mm thick workpiece) so an operator can achieve a proper weave and penetrate the side wall consistently. This increased gap width increases the duration of the welding operation and utilizes more of the consumable, Efforts have been made to weave the arc via a magnetic field during welding, However, magnetization of the workpiece is not desirable, particularly when welding high Ni based alloys. Therefore, an improved, more efficient, method of welding these types of materials is needed.

Further limitations and disadvantages of conventional, traditional, and proposed approaches will become apparent to one of skill In the art, through comparison of such approaches with embodiments of the present invention as set forth in the remainder of the present application with reference to the drawings,

### BRIEF SUMMARY OF THE INVENTION

An exemplary embodiment of the present Invention is a welding system and method In which a welding consumable is rotated by a mechanism after the consumable leaves the contact tip of the welding torch. The torch travel is maintained in a straight path relative to the weld groove while the wire is rotated, thus mimicking a traditional weave pattern. However, there is no need for magnetization and a satisfactory weld can be completed with minimal gap size and minimal use of consumables. Further embodiments, advantages and aspects of the invention are given in the ensueing description, drawings and claims.

### BRIEF DESCRIPTION OF THE DRAWINGS

The above and/or other aspects of the invention will be more apparent by describing In detail exemplary embodiments of the invention with reference to the accompanying drawings, in which;
FIG. 1 is a diagrammatical representation of an exemplary welding system of embodiments of the invention;
FIG. 2 is a diagrammatical representation of a view of an exemplary welding operation;
FIG. 3 Is a diagrammatical representation of a further view of an exemplary welding operation;
FIG. 4 is a diagrammatical representation of an additional view of an exemplary welding operation;
FIGs. 5A and 5B are diagrammatical representations of exemplary welding operations of the present Invention;
FIGs. 6A to 6F are diagrammatical representations of exemplary consumable paths;
FIG. 7 is a diagrammatical representation of an exemplary consumable path of the present invention; and
FIG. 8 is a diagrammatical representation of an exemplary wire manipulation collar of the present invention.

### DETAILED DESCRIPTION

Reference will now be made in detail to various and alternative exemplary embodiments and to the accompanying drawings, with like numerals representing substantially identical structural elements. Each example is provided by way of explanation, and not as a limitation. In fact, it will be apparent to those skilled in the art that modifications and variations can be made without departing from the scope or spirit of the disclosure and claims. For instance, features illustrated or described as part of one embodiment may be used on another embodiment to yield a still further embodiment. Thus, it is Intended that the present disclosure includes modifications and variations as come within the scope of the appended claims and their equivalents.

Exemplary embodiments described herein are particularly applicable for use in connection with FCAW welding operations and, therefore, embodiments of the present invention will be described with particular reference to FCAW welding operations and systems. However, the claimed invention has broader applications and may be used with other types welding operations, such as GMAW or Sub-Arc, for example. Additionally, the following exemplary embodiments are described in relation to a semi-automatic welding operation. However, other exemplary embodiments can be either automatic or manual. Further, while embodiments of the present invention are described in relation to welding high strength, Ni based materials, the benefits of the embodiments described herein can be achieved in many different welding operations of different materials and applications.

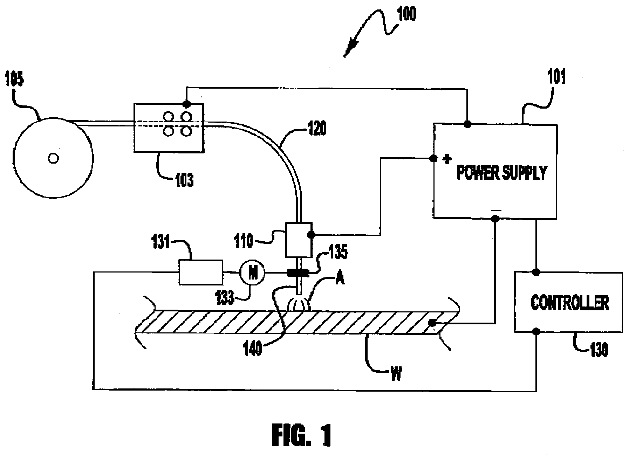

Turning now to Figure 1, an exemplary FCAW welding system 100 is depicted. As with known systems, the system 100 contains a power supply 101, wire feeder 103 and torch 110. The power supply 101 can be any known power supply capable of providing the desired welding waveform and power for the welding operation. The power supply 101 communicates with a wire feeder 103 which feeds a consumable 140 (which can be a FCAW consumable, for example) from a source 105 through a cable 120 to the welding operation. Not shown is a shielding gas system, which can be used in some welding operations. The consumable 140 is delivered to a torch 110 which directs the consumable 140 to the welding operation so that a workpiece W can be welded. The system can also include a controller 130 which controls and/or manages the welding operation. The controller 130 can be any type of computer or microprocessor based system which is capable of controlling aspects of the welding operation. Such controllers are generally known and need not be described in detail herein. While the controller 130 Is shown In Figure 1 as a separate component, it should be understood that the controller 130 can be internal to another component, such as the power supply 101 and need not be a separate device or component. The structure and operation of such welding systems are known by those in the art and their details need not be described herein.

As additionally shown in Figure 1, the exemplary system 100 contains a consumable manipulation system which contains, for example, a controller 131, a motor 133 and a wire manipulator 135. As described more fully below, the wire manipulator 135 is located downstream of the end of the contact tip of the torch 110 - between the distal end of the contact tip and the end of the consumable 140 during welding. The motor 133 can be any known type of motor, or motion control device that is capable of moving the manipulator 135 in the desired motion (as more fully described below). For example, the motor can be any type of solenoid, gear driven mechanism, electric motor, etc. The manipulator is used to move the consumable 140 in a desired pattern to provide an optimal welding operation. As shown, this movement of the consumable 140 is such that the tip of the consumable is moved off of the centerline of the contact tip,. This will be described In more detail below.

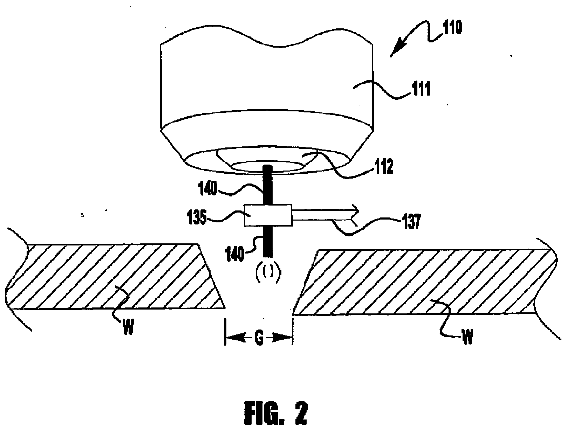

Figure 2 depicts a close up view of an exemplary welding operation. As with typical welding operations the torch 110 is position above the centerline of the weld groove. The torch 110 has at least a nozzle 111 and a contact tip 112 through which the consumable 140 passes to the welding operations, In the embodiment shown, two workpieces W are being joined in a typical bevel joint welding operation. As referenced above, when welding high strength Ni based materials, a joint of this type needs to have a groove gap G width of around 10 mm or more to allow the torch 110 to move in a weave pattern to get optimal sidewall penetration of the weld joint. This is particularly the case when the material thickness of the workpieces is 6mm or greater, In these welding operations a backing plate is typically used at the bottom of the gap to aid in creating the weld bead. However, unlike known welding operations, embodiments of the present invention do not weave the torch 110 or the workpieces W, but instead physically manipulate the consumable 140 downstream of the exit of the contact tip 112 to move the arc to the desired location during welding. As stated, in exemplary embodiments the movement of the consumable 140 is achieved physically and not via magnetics, thus avoiding the issues with magnetizing the workpieces W.

In an exemplary embodiment a wire manipulator 135 is positioned downstream of the exit of the contact tip 112 and Is capable of physically moving the wire as desired. A linkage 137 can connect the manipulator 135 to any motor 133 or other movement mechanism. The linkage 137 can include any type of cam system, gear system or any other devices or components needed to move the consumable 140 as desired - ex-plained more fully below. By moving the consumable 140 downstream of the contact tip 112 the desired sidewall penetration and weld quality and strength can be achieved without the need of moving the torch 110 side-to-side, or using magnetics to manipulate the arc. Because of this, embodiments of the present invention can significantly reduce the width of the gap G when welding material thicknesses of 6mm or greater. For example, when welding Ni based components, the gap G can be reduced to 3 to 6 mm, and in some embodiments can be 4mm. This not only greatly speeds up the welding process but significantly reduces the amount of consumable which is used - resulting in significant financial and quality benefits over known methods.

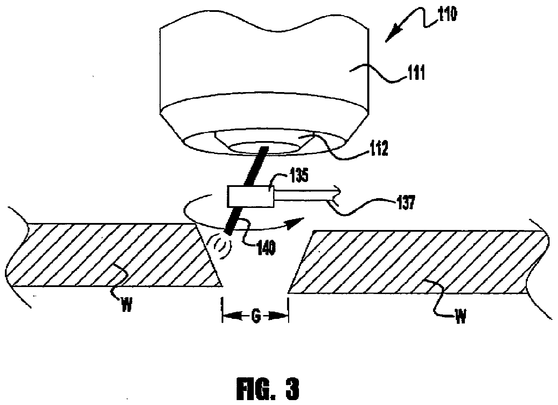

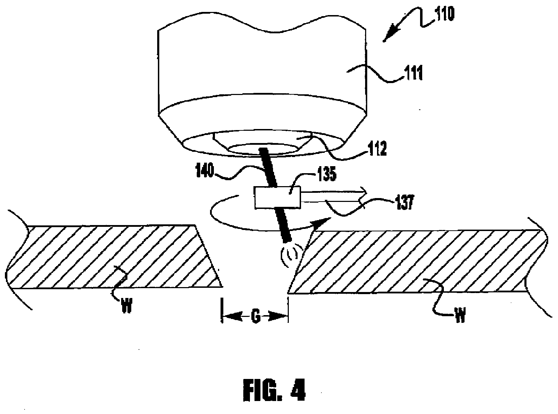

Figures 3 and 4 depict the welding operation, where the manipulator 135 has moved the consumable 140 to different locations during the welding operation. As shown, the torch 110 remains fixed relative to the centerline of the weld gap (in the travel direction) while the manipulator 135 moves the consumable 140 In a pattern relative to the weld gap. In Figures 3 and 4 the consumable 140 is moved in a circular pattern. This circular pattern has a radius which takes into account at least the gap width, material thickness and welding stick out, to ensure that the consumable 140 does not make contact with the workpieces W and sufficient sidewall penetration is achieved during the welding process.

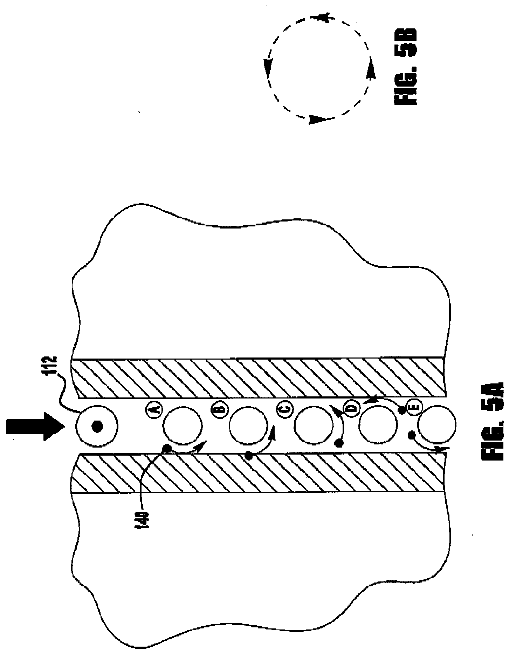

Figures 5A and 5B depict a top down view of any exemplary weld pattern of the consumable 140. For clarity, the location of the consumable 140 as shown in Figure 5A Is simply the location of the tip of the consumable 140 during the welding operation. Also, for clarity the manipulator 135 Is not shown. As shown in Figures 5A and 5B the pattern of the consumable 140 is a circular pattern and as the torch 110 moves along the centerline of the weld gap (in the travel direction) the tip of the consumable 140 is moved in a desired pattern. As shown, as the torch moves through positions A through E the tip of the consumable 140 is moved in a circular pattern. This circular pattern mimics a weave pattern, obtains desired sidewall penetration and allows for a minimal gap G width to be used.

In the embodiment shown in Figure 5A, the radius of the circular pattern (e.g., Fig. 5B) is such, from a top down view, the tip of the consumable 140 overlaps onto the sidewall of the weld groove. This is shown at position B where, from a top down view, the tip 140 is moved over at least some of the workpiece W because the diameter of the circle pattern or deflection is larger than the lateral distance of the gap G. This is also generally shown in Figures 3 and 4 from a front view. Stated differently, the radius of the pattern (or the amount of the deflection) is such that if view from the bottom of the weld gap the tip of the consumable will be obscured by the bottom surface of the workplece W. Such embodiments may be needed to achieve the desired sidewall penetration during welding. In other exemplary embodiments the tip 140 Is moved such that it always stays within the gap of the weld and never is moved over a portion of the workpiece. This is generally depicted in positions A, C, D and E of Figure 5A, Embodiments of the invention can take into account the angles/steepness of the sidewalls of the weld groove as well as groove thickness to determine a desired maximum sideways deflection from the centerline during welding.

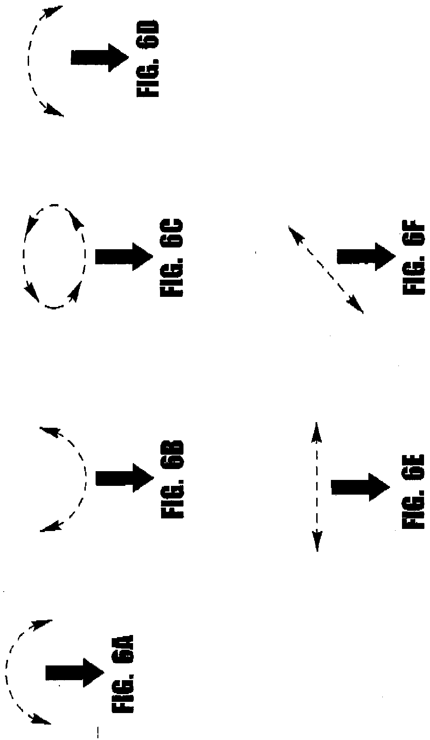

While Figures 5A and 5B depict a generally circular pattern of consumable manipulation, other patterns and embodiments can be used. Figures 6A through 6F depict other possible consumable manipulation patterns. Figure 6A depicts a semi-circular pattern where the arc is extending in the trailing direction relative to the travel direction of the torch. Figure 6B is the opposite, where the semi-circular arc is extending in the same direction as the travel direction. Of course, the pattern need not be either fully circular or semicircular, but can be some partial circular (having a constant radius) arc which is less or more than 180 degrees. For example, the arc can be in the range of 90 to 270 degrees. In other exemplary embodiments, the pattern can be different than circular. For example, Figures 6C and 6D depict an elliptical, oblate, or oval consumable pattern. It is noted that while the long axis of the shapes in Figures 6C and 6D are shown perpendicular to the travel direction, In other embodiments, the long axis can be aligned with the travel direction, or even positioned at an angle relative to the travel direction. Additionally, the consumable can be physically manipulated in a straight line pattern which is either directly perpendicular to the travel direction (see Figure 6E), or can be angled relative to the travel direction (see Figure 6F). In fact, while not shown, in some embodiments, the consumable can be swung back and forth coincident with the travel direction of the torch if desired.

It is noted that the above exemplary embodiments are intended to be exemplary and other consumable travel patterns can be utilized during a weld. In fact, in some exemplary embodiments, the shape and/or size of the consumable pattern can be changed during a welding operation. For example, in some embodiments, a first portion of a welding operation can use a circular consumable pattern having a first radius, and a second portion of the weld have a second radius which Is different than the first. Similarly, other embodiments can have a first portion with a circular pattern, and a second portion of the weld with an elliptical or straight line pattern. This can be changed "on-the-fly" via the controller of the system, as needed.

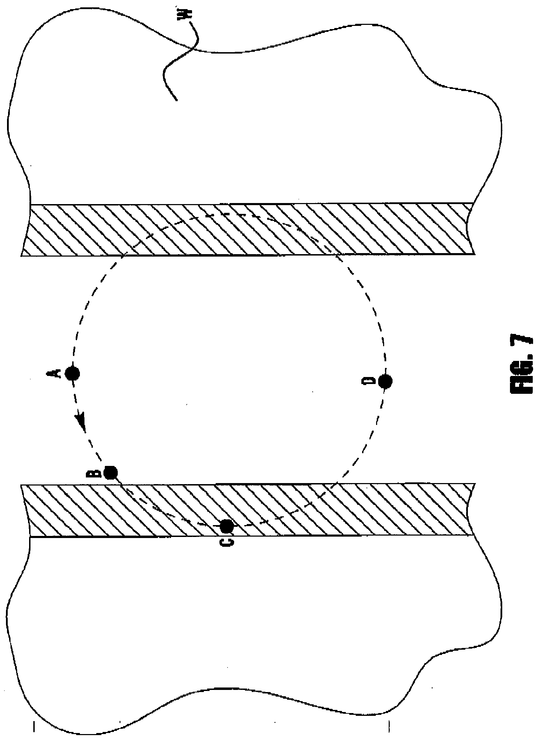

Additionally, during welding the controller 130 can change other welding parameters during welding based on the physical location of the tip of the consumable relative to the weld groove. In fact, the controller 130 can change any one of wire feed speed, current, voltage, stick-out, and travel speed of the torch based on the positioning of the tip of the consumable. This Is explained further in reference to Figure 7.

In Figure 7, which is a top down view of an exemplary weld groove and a circular consumable pattern (which overlaps the sidewalls of the groove) having representative consumable positions A, B, C and D. The travel direction of the torch in Figure 7 is from A to D - that is the torch is moving down the figure. In an exemplary embodiment of the invention, the controller 130 controls the power supply 101, wire feeder 103 and/or torch 110 such that at least one, all or a combination of the welding current/voltage, WFS, stick-out, and travel speed are constant throughout the entire pattern of the consumable tip. However, in other embodiments this may not be desirable and as the positioning of the consumable tip changes relative to its position in the groove at least one (maybe all) of the above parameters are changed. Some examples of this are discussed below, but are not intended to be limiting. Also, while various parameters are discussed below individually, the controller 130 can control the operation such that the changes to the various parameters are combined as needed to achieve the desired weld quality and results.

### Wire Feed Speed (WFS)

In some exemplary embodiments, the wire feed speed of the consumable 140 can be changed during the operation. For example, at position A a first WFS is used and as the tip moves towards position C the WFS is slowed to account for the height of the sidewall and as the tip advances to position D the WFS can be accelerated again. Further, In some embodiments, the WFS can be constant between points A and B, and only at reaching the point B the WFS is slowed, This can be done to prevent over-penetration into or contact with the sidewall and/or to manipulate stick-out as the sidewall Is reached. In fact, in some embodiments the WFS can be different between points A and D. For example, the travel pattern of the tip can be used to build layers onto the weld bead. For example, when the consumable Is at point D (the leading edge of the pattern) the consumable can be used to place a root bead into the gap, and when the tip reaches point the trailing portion of its travel pattern (e.g., the circle) the consumable can be used to place additional material onto the root pass created at point D. That is, the welding operation at point A can be adding to the already placed root bead (e.g., placed at point D). In such an embodiment, it may be desirable to have a first WFS for the leading half of the consumable motion pattern and a second WFS for the trailing half - (assuming that the shape of the pattern is dividing in half by a line perpendicular to the travel direction/groove centerline that passes through the center of the contact tip In a top down view). The second WFS can either be faster or slower than the first depending on the desired weld performance. Of course, in exemplary embodiments, the transition from the first WFS to the second WFS can be gradual as opposed to a point change. For example, the WFS can gradually (e.g., linearly) Increase from point B to point C before gradually decreasing again.

### Current/Voltage

Similar to the control of the WFS (discussed above) the peak and/or average current/voltage of the welding waveform can be changed based on the position of the tip of the consumable. That is, the controller 130 can change parameters of the welding waveform based on the positioning of the tip of the consumable. That is, when the tip is at a first position (e.g., position A) a first waveform having a first set of current and/or voltage parameters is used, whereas at a second position (e.g., position C) a second waveform having a second set of current end/or voltage parameters can be used. In fact, In some embodiments, the structure of the waveform itself can change. For example, at point A the waveform is a pulse type welding waveform, and between point B and C the waveform is a short arc type waveform. Of course, these waveform types are intended to be exemplary and are not limiting, and other waveform types can be used. Thus, as with the discussion regarding WFS, the controller 130 can change aspects of the welding waveform based on positioning of the consumable to achieve the desired weld parameters and penetration as the wire is moved.

### Travel Speed

Again, similar to the discussions above, the travel speed of the torch 110 can be changed by the controlled (in a seml-automatlc or automatic welding processes) based on the positioning of the tip of the consumable. For example, It may be desirable to have the torch 110 traveling faster as the tip approaches point C then either points A and D and so the torch speed is accelerated, for example, from point B to C and then decelerates as it moves toward point D. Of course, in other embodiments, it may be desirable to have to have the torch moving faster as it approaches points A and/or D. Again, depending on the desired weld bead the controller 130 can control the travel speed of the torch.

### Stick-Out

Again, similar to that discussed above, the stick-out of the consumable 140 can be adjusted by the controller 130 based on the positioning of the tip of the consumable 140 during welding. As above, it may be desirable to change the stick-out during the movement of the consumable as It moves around the weld groove. For example, If the consumable is being moved linearly perpendicular to the travel direction centerline it may be desirable to maintain a constant distance between the weld puddle surface and the end of the consumable. For example, as the consumable tip moves from the center of the groove to point C (Figure 7), such that as the consumable 140 approaches the point C it may be necessary to increase the stick out to maintain a constant distance between the tip end and the puddle. That is, because of the geometric aspects of the movement (e.g., Pythagorean Theorem) without extending the stick-out the distance between the tip of the consumable and the puddle would increase as the angle from center increases. Thus if the tip-to-puddle gap is to be maintained the controller 130 can cause the stick out to be maintained. This can be accomplished in a number of different ways, for example increasingldeaeasing WFS and/or moving the height of the torch.

It should be noted that while the above parameters are discussed separately the controller 130 can change any one, all, or any combination of the above parameters based on the movement of the consumable 140.

In exemplary embodiments of the present invention the controller 130 can use feedback from the welding operation to determine the positioning of the consumable and control aspects of the welding operation. In some exemplary embodiments, the controller 130 uses positional feedback from the manipulation system to determine the positioning of the consumable. For example, the motor 133 and/or the manipulator 135 can be monitored. Further, other exemplary embodiments can monitor voltage and/or current feedback and using this information, in conjunction with state tables, control algorithms, or the like, can determine the positioning of the consumable tip. Of course, other control methodologies can be used without departing from the spirit or the scope of the present invention.

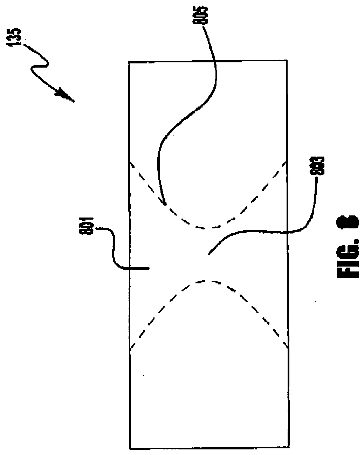

Figure 8 depicts an exemplary embodiment of the wire manipulator 135 that can be positioned downstream of the contact tip and used to move the wire. As shown, the manipulator 135 has a throat 801 through which the consumable passes to the welding operation. The throat 801 has a narrow throat portion 803 which is slightly larger than the diameter of the consumable and contacts the consumable to move it to a desired location. Also, the throat has angled wall portions 805 which angle such that at each end of the manlpulator the openings are larger than the narrow portion 803. These angled surfaces 805 allow for angle of the consumable through the throat 801 as the manipulator is moved around. Of course other geometric configurations can be used without departing from the spirit and scope of the present invention. Additionally, edges and corners of the throat can be curved to allow for smooth movement by the consumable 140, and prevent scratching or gouging the consumable. Further, in exemplary embodiments, the manipulator 135 is made from a dielectric material which has a high resistance to heat. For example, a ceramic material can be used. It is noted that to the extent a shielding gas is needed for a welding operation, the manipulator 135 should have a dimension and shape to ensure that the shielding gas can effectively function. If the manipulator 135 is too large It may interfere with proper shielding gas function.

Additionally, in some exemplary embodiments the contact tip 112 of the torch 110 can have a beveled edge to the passage for the consumable 140 at the exit of the passage. That Is, In some embodiments the consumable exit at the distal end face of the contact tip 112 is beveled so as to allow for movement of the consumable as described above to prevent scratching or gouging of the consumable at a sharp end of the contact tip.

As explained above, the manipulator 135 can be moved by any mechanical means which is capable of moving the consumable in the desired path. A cam or gear structure can be used, for example. Further, while Figures 2, 3 and 4 show the manipulator 135 downstream of the edge of the nozzle 112, In some embodiments, the top of the manipulator can be located at least partially within the nozzle.

While the disclosed subject matter of the present application has been described with reference to certain embodiments, it will be understood by those skilled in the art that various changes may be made and equivalents may be substituted without departing from the scope of the claimed subject matter. In addition, many modifications may be made to adapt a particular situation or material to the teachings of the described subject matter without departing from its scope. Therefore, it is intended that the described subject matter not be limited to the particular embodiment disclosed, but that the disclosed subject matter will include all embodiments falling within the scope of the present specification.

### REFERENCE NUMBERS

- 100: system
- 101: power supply
- 103: wire feeder
- 105: source
- 110: torch
- 111: nozzle
- 112: contact tip
- 120: cable
- 130: controller
- 131: controller
- 133: motor
- 135: manipulator
- 137: linkage
- 140: consumable
- 801: throat
- 803: narrow throat portion
- 805: angled wall portions

- G: gap
- W: workpiece

## Claims

1. A welding system (100), comprising:
a welding power supply (101) which provides a welding current to a welding consumable (140) during a welding operation;
a welding torch (110) comprising a contact tip (112) where said welding consumable (140) is delivered to said welding operation through said contact tip (112); **characterized by**
a wire manipulation device comprising a wire manipulator (135) and a mechanism to move said wire manipulator (135), where said manipulator (135) is positioned between said contact tip (112) and said welding operation;
wherein said manipulation device moves said welding consumable downstream of said contact tip (112) relative to a centerline of said contact tip.

2. The welding system of claim 1, wherein said contact tip (112) Is maintained at a constant position relative to a gap (G) between workpieces (W) during said welding operation.

3. The welding system of claim 1 or 2, wherein said wire manipulation device moves said welding consumable (140) such that a tip of said welding consumable (140) is moved in a circular pattern relative to said welding operation, wherein preferably: a gap of said welding operation has a lateral distance relative to a direction of welding and wherein a diameter of said circular pattern is larger than said lateral distance, and/or wherein preferably: said wire manipulation device changes a radius of said circular pattern during said welding operation.

4. The welding system of one of the claims 1 to 3, wherein said wire manipulation device changes a movement of said welding consumable (140) downstream of said contact tip (112) during said welding operation.

5. The welding system of one of the claims 1 to 4, wherein at least one of a wire feed speed, welding current, welding voltage, stick-out or travel speed is changed during said welding operation; wherein preferably: at least one of a wire feed speed, welding current, welding voltage, stick-out or travel speed is changed during said welding operation based on movement of said welding consumable by said wire manipulation device.

6. The welding system of one of the claims 1 to 5, wherein said manipulator (135) has a throat portion (801) through which said welding consumable (140) passes, wherein said throat portion (801) has a narrow throat portion (803) which is larger in diameter than said welding consumable (140).

7. The welding system of claim 6, wherein said throat portion (801) has angled surfaces (805) coupled to said narrow throat portion (803).

8. A method of welding, comprising:
providing a welding current a welding consumable (140) during a welding operation;
advancing said welding consumable (140) through a contact tip (112) on a welding torch (110) during said welding operation;
**characterized by**
moving said welding consumable (140) with a wire manipulation device having a wire manipulator (135), where said manipulator (135) is positioned between said contact tip (112) and said welding operation; and
wherein said manipulation device moves said welding consumable (140) downstream of said contact tip (112) relative to a centerline of said contact tip (112).

9. The welding method of claim 8, further comprising maintaining said contact tip (112) at a constant position relative to a gap (G) between workpleces (W) during said welding operation.

10. The welding method of claim 8 or 9, further comprising moving said welding consumable (140) such that a tip of said welding consumable (140) is moved in a circular pattern relative to said welding operation.

11. The welding method of claim 10, further comprising changing a radius of said circular pattern during said welding operation.

12. The welding method of claim 10 or 11, wherein a gap (G) of said welding operation has a lateral distance relative to a direction of welding and wherein a diameter of said circular pattern is larger than said lateral distance.

13. The welding method of one of the claims 8 to 12, further comprising changing a movement of said welding consumable downstream of said contact tip during said welding operation.

14. The welding method of one of the claims 8 to 13, further comprising changing at least one of a wire feed speed, welding current, welding voltage, stick-out or travel speed during said welding operation, and preferably changing at least one of a wire feed speed, welding current, welding voltage, stick-out or travel speed during said welding operation based on movement of said welding consumable by said wire manipulation device.

15. The welding method of one of the claims 8 to 14, further comprising passing said welding consumable (140) through a throat portion (801) in said wire manipulator, wherein said throat portion (801) has a narrow throat portion (803) which is larger in diameter than said welding consumable (140), wherein preferably: said throat portion (801)has angled surfaces (805) coupled to said narrow throat portion (803).
